# FASCICULE DE BREVET EUROPEEN

(11) **EP 1 817 506 B1**
(45) Date de publication et mention de la délivrance du brevet: **06.01.2010**
(21) Numéro de dépôt: 05776366.6
(22) Date de dépôt: 17.08.2005
(51) Int. Cl.: F16F 1/40

(54) **RESSORT DE COMPRESSION ET PROCEDE POUR SA FABRICATION**
DRUCKFEDER UND VERFAHREN ZU IHRER HERSTELLUNG
COMPRESSION SPRING AND MANUFACTURING METHOD THEREOF

(30) Priorité: 23.08.2004 EP 04019926
(43) Date de publication de la demande: 15.08.2007
(73) Titulaire: Bureau Mertens, 1341 Céroux-Mousty (BE)
(72) Inventeur: MERTENS, Rudy, B-1341 Céroux-Mousty (BE)
(86) Numéro de dépôt international: PCT/EP2005/008910
(87) Numéro de publication internationale: WO 2006/021357

(56) Documents cités:
- WO-A-98/46930
- FR-A- 2 602 293
- PATENT ABSTRACTS OF JAPAN vol. 1999, no. 13, 30 novembre 1999 (1999-11-30) -& JP 11 210090 A (BRIDGESTONE CORP), 3 août 1999 (1999-08-03)

## Description

### Domaine de l'invention

L'invention se rapporte aux ressorts, spécialement aux ressorts de compression en matière élastomère.

### Etat de la technique

Dans les documents US-A-4 198 037, GB-A-2 180 618 et WO 98/46930, on décrit des ressorts en élastomère, spécialement conçus pour fonctionner en compression. Ces ressorts comprennent un corps formé d'un bloc en élastomère thermoplastique auquel on a fait subir un traitement mécanique approprié, comprenant une déformation par compression au delà de la limite élastique de l'élastomère thermoplastique, la compression étant suivie d'une détente du bloc. A l'issue de la détente, le bloc en élastomère thermoplastique conserve une déformation rémanente, qui dépend de la grandeur de l'effort de compression et de l'élastomère thermoplastique sélectionné.

Dans le document US-A-4 198 037, le corps en élastomère thermoplastique est un bloc plein. Ces ressorts connus ont généralement une faible course, comparée à leur encombrement. Ils sont en outre des ressorts durs, le rapport entre la force de compression et leur déformation étant élevé.

Dans le document GB-A-2 180 618, le corps en élastomère thermoplastique est un bloc évidé, généralement tubulaire. Les ressorts ainsi obtenus sont généralement plus souples que les ressorts en blocs pleins, mais leur course n'est que peu améliorée. Ils se prêtent en outre difficilement à la fabrication de ressorts de grande longueur, car ils sont facilement sujets à une déformation par flambage.

Dans le document WO 98/46930, le corps en élastomère thermoplastique est composite ; il comprend deux éléments en élastomère thermoplastique dont l'un est cylindrique et se trouve enchâssé dans l'autre qui est annulaire.

Les ressorts obtenus dans les documents précités ont généralement la forme d'un boudin annulaire de faible hauteur. Ces ressorts connus ont généralement une faible course, comparée à leur encombrement, ce qui peut constituer un inconvénient pour certaines applications. Pour remédier à cet inconvénient, on a songé, dans les documents US-A-4 198 037, GB-A-2 180 618 et WO 98/46930, à superposer plusieurs boudins entre lesquels on interpose des disques métalliques. Les disques métalliques servent à solidariser les boudins les uns aux autres, pour former un ensemble cohérent. A cet effet, ils sont pourvus de moyens d'accrochage aux boudins. Ces moyens d'accrochage peuvent comprendre des zones évidées ou des aspérités au contact desquelles on fait fluer l'élastomère thermoplastique des boudins sous l'effet d'un effort de compression additionnel. La fabrication de tels ressorts est compliquée et onéreuse. Elle nécessite la confection de disques de profil compliqué, comprenant des aspérités appropriées ou des évidements appropriés. Elle implique en outre d'utiliser un appareillage adapté pour centrer correctement l'empilage des boudins et des disques.

Dans le document WO-01/34995, on propose un ressort qui remédie à cet inconvénient des ressorts à blocs empilés. Dans ce ressort connu, schématisé à la figure 4 du document WO-01/34995, le corps du ressort est cerclé d'une bague rigide avant d'être soumis au traitement mécanique précité de compression/détente. Dans la fabrication de ce ressort connu, on se heurte toutefois à la difficulté d'ajuster correctement la bague et de la maintenir en position avant et pendant le traitement mécanique susdit.

Le document FR-2 602 293 concerne des dispositifs antisismiques associant des éléments élastiques avec des éléments amortisseurs. On y décrit un dispositif comprenant un noyau cylindrique en une matière viscoélastique, qui est enchâssé dans un assemblage composite formé de manchons en une matière élastique, alternant avec des bagues en une matière indéformable.

### Résumé de l'invention

L'invention vise à remédier aux inconvénients et désavantages des ressorts connus décrits plus haut, en fournissant un ressort de compression dont les performances sont améliorées et dont la fabrication est facilitée.

L'invention vise plus particulièrement un ressort de compression formé d'un empilage de boudins annulaires en élastomère thermoplastique, dont la fabrication est facilitée et moins onéreuse que celle des ressorts connus décrits plus haut.

En conséquence, l'invention concerne un ressort de compression comprenant un cylindre en élastomère thermoplastique, qui est enchâssé dans un assemblage composite comprenant une alternance de n manchons en élastomère thermoplastique et de (n-1) bague(s) sensiblement indéformable(s), la ou chaque bague indéformable étant prise en sandwich entre deux desdits manchons et encerclant ledit cylindre ; selon l'invention, le ressort se caractérise en ce que les manchons sont des corps géométriques en forme d'anneaux dont la face latérale est cintrée vers l'extérieur du ressort.

Dans le ressort selon l'invention, le cylindre et les manchons sont en élastomère thermoplastique. Par définition, un élastomère est une matière macromoléculaire présentant des propriétés élastiques. Un élastomère thermoplastique est un élastomère qui conserve des propriétés élastiques après avoir subi une déformation rémanente par fluage plastique sous l'action d'un effort de compression. Les propriétés élastiques à la compression, de l'élastomère thermoplastique qui a subi la déformation rémanente sont normalement différentes de celles de l'élastomère avant la déformation. Les élastomères thermoplastiques sont bien connus en technique et sont généralement des élastomères de synthèse.

Moyennant les propriétés énoncées plus haut, l'élastomère thermoplastique sélectionné pour le ressort selon l'invention n'est pas critique pour la définition de l'invention. On utilise avantageusement des polyesters thermoplastiques. Des exemples de polyesters thermoplastiques convenant pour l'invention appartiennent à la famille des copolymères d'esters de polyéthers.
Des copolymères obtenus par transestérification d'un ester dérivé d'acide phtalique, d'un glycol à faible poids moléculaire et d'un polyéther glycol conviennent bien, notamment ceux commercialisés sous la marque HYTREL^{®} (Du Pont). Des informations concernant ces copolymères sont notamment accessibles dans le document Polymer Engineering and Science, décembre 1974, Vol. 14, n°12, pages 848 à 852, ainsi que dans le document Encyclopedia of polymer Science and Technology, Supl. Vol. II, Wiley & Son, New York, 1977, pages 484-509.
Les élastomères connus sous la marque ARNITEL^{®} (DSM) conviennent spécialement bien.

Dans le ressort selon l'invention, le cylindre est enchâssé dans un assemblage composite comprenant une alternance de n manchons en élastomère thermoplastique et de (n-1) bagues sensiblement indéformables.

Conformément à l'invention, n désigne un nombre entier au moins égal à 2. Dans le cas où n=2, le ressort comprend une seule bague sensiblement indéformable, qui est prise en sandwich entre deux manchons. Dans le cas où n est supérieur à 2, le ressort selon l'invention comprend plusieurs bagues sensiblement indéformables qui alternent avec les manchons, de telle sorte que chacune desdites bagues sensiblement indéformables soit prise en sandwich entre deux manchons.

On entend désigner par l'expression « bague sensiblement indéformable », une bague ou un anneau dont le diamètre intérieur ne subit pas de changement substantiel pendant la fabrication du ressort (la fabrication du ressort et l'expression « dont le diamètre intérieur ne subit pas de changement substantiel pendant la fabrication du ressort » seront explicitées plus loin). La ou chaque bague sensiblement indéformable du ressort selon l'invention est de préférence rigide. Elle est généralement en métal, bien qu'une autre matière appropriée puisse également convenir.
Dans la suite du présent mémoire, la ou chaque bague sensiblement indéformable sera désignée « bague indéformable », par mesure de simplicité.

Dans le ressort selon l'invention, les manchons sont des anneaux dont la face latérale est bombée, de sorte qu'ils s'apparentent aux boudins des ressorts dont il a été question plus haut, en référence au document WO 98/46930. La forme des manchons sera davantage explicitée au cours de la description qui va suivre de leur fabrication.
Les dimensions des manchons ne sont pas critiques pour la définition de l'invention. Elles vont dépendre des propriétés recherchées pour le ressort, celles-ci étant déterminées par l'application à laquelle on destine le ressort. Elles peuvent être déterminées dans chaque cas particulier par un homme du métier.

Dans le ressort selon l'invention, les n manchons forment une succession de n boudins annulaires, encerclant le cylindre, ce dernier étant commun aux n manchons. Le ressort selon l'invention comprend au moins deux boudins annulaires séparés par une bague indéformable qui encercle le cylindre. En variante, le ressort selon l'invention peut comprendre plus de deux boudins annulaires superposés. Dans le cas particulier où le ressort selon l'invention comprend trois boudins annulaires (n=3), ceux-ci alternent avec deux bagues indéformables qui encerclent le cylindre et qui sont prises en sandwich entre trois manchons en élastomère thermoplastique. Dans le cas particulier où le ressort selon l'invention comprend quatre boudins annulaires (n=4), ceux-ci alternent avec trois bagues indéformables qui encerclent le cylindre et qui sont prises en sandwich respectivement entre quatre manchons en élastomère thermoplastique.

En principe, pour la définition de l'invention, il n'existe pas de limite supérieure à la valeur du nombre n. En pratique toutefois, le nombre n est limité par la nécessité d'assurer la stabilité mécanique du ressort, notamment sa résistance au flambage dans des conditions normales d'utilisation. La limite supérieure du nombre n va dès lors dépendre de divers paramètres, notamment du diamètre des boudins, de leur épaisseur et de l'élastomère thermoplastique mis en oeuvre. Elle doit être déterminée dans chaque cas particulier par un homme du métier.

Dans le ressort selon l'invention, le cylindre et les manchons peuvent être en un même élastomère thermoplastique. L'invention s'applique toutefois aussi au cas où l'élastomère thermoplastique du cylindre est différent de celui des manchons. De manière similaire, les manchons peuvent être réalisés dans un même élastomère thermoplastique ou dans des élastomères thermoplastiques différents.

Dans une forme de réalisation préférée du ressort selon l'invention, le cylindre forme, à l'intérieur du ressort, n boudins circulaires superposés, alternant avec la ou les bague(s) indéformable(s) qui l'enserre(nt). Dans cette forme de réalisation du ressort, la face circulaire intérieure des manchons est concave et la face latérale de chacun des boudins circulaires est bombée et s'encastre dans la face concave d'un manchon. Cette forme de réalisation particulière du ressort selon l'invention sera mieux comprise au cours de la description qui va suivre du procédé de fabrication du ressort selon l'invention.

Dans le ressort selon l'invention, la ou chaque bague indéformable, le cylindre et les manchons sont généralement de révolution autour d'un axe commun.

Dans le ressort selon l'invention, le cylindre en élastomère thermoplastique peut être un cylindre plein ou un cylindre tubulaire.

Dans une forme de réalisation particulière du ressort selon l'invention, le cylindre en élastomère thermoplastique est un cylindre tubulaire et un barreau indéformable se trouve inséré dans ledit cylindre tubulaire et en contact avec une partie au moins de sa paroi interne. Dans cette forme de réalisation de l'invention, le barreau indéformable a pour fonction d'augmenter la résistance du ressort au flambage. Il est conçu pour présenter une grande résistance à la flexion et il est avantageusement en métal, par exemple en acier, bien que d'autres matières puissent également convenir. Le barreau peut être une barre pleine ou un tube.
Cette forme de réalisation de l'invention permet la réalisation de ressorts de grande longueur, comprenant un nombre élevé de boudins annulaires superposés.

Dans une forme de réalisation modifiée du ressort selon l'invention, le cylindre en élastomère thermoplastique est composite et formé d'un noyau cylindrique, enchâssé dans un fourreau. Dans cette forme de réalisation de l'invention, le fourreau et son noyau cylindrique sont communs à l'ensemble des manchons et de la ou des bague(s) et le fourreau est encerclé par la ou chaque bague. Dans cette forme de réalisation, l'élastomère thermoplastique du fourreau peut être la même que celui du noyau cylindrique ou différent de celui-ci. Par ailleurs, le noyau cylindrique peut être un cylindre plein ou un noyau tubulaire. Dans une variante de la forme de réalisation qui vient d'être décrite, le noyau cylindrique qui se trouve enchâssé dans le fourreau est tubulaire et un barreau indéformable se trouve inséré dans ce noyau tubulaire et en contact avec une partie au moins de sa paroi interne. Dans cette variante de l'invention, le barreau indéformable a pour fonction d'augmenter la résistance du ressort au flambage. Il est conçu pour présenter une grande résistance à la flexion et il est avantageusement en métal, par exemple en acier, bien que d'autres matières puissent également convenir. Le barreau peut être une barre pleine ou un tube. Cette forme de réalisation de l'invention permet la réalisation de ressorts de grande longueur, comprenant un nombre élevé de boudins annulaires superposés.

Dans une forme de réalisation supplémentaire du ressort selon l'invention, chaque manchon est enchâssé à l'intérieur d'un fourreau périphérique ou d'un assemblage d'au moins deux fourreaux périphériques enchâssés l'un dans l'autre.

Le ressort selon l'invention est fabriqué au moyen d'un procédé nouveau et inventif qui dérive des procédés de fabrication décrits dans les documents US-A-4 198 037, GB-A-2 180 618 et WO 98/46930, en les perfectionnant.

L'invention concerne dès lors également un procédé de fabrication d'un ressort de compression conforme à l'invention, tel que défini plus haut, selon lequel on enchâsse un cylindre en élastomère thermoplastique dans un assemblage tubulaire comprenant n manchons en élastomère thermoplastique alternant avec (n-1) bague(s) sensiblement indéformable(s), de telle manière que la ou chaque bague soit prise en sandwich entre une paire desdits manchons, puis on soumet le corps composite ainsi obtenu, à un effort de compression suffisant pour provoquer une déformation rémanente du cylindre et on relâche ensuite l'effort.

Dans le procédé selon l'invention, n désigne un nombre entier au moins égal à 2. La grandeur du nombre n a été explicitée plus haut dans la définition du ressort selon l'invention.

Dans le présent mémoire, le vocable « cylindre » désigne une surface géométrique définie par le déplacement d'une ligne géométrique (la génératrice) parallèlement à elle-même, le long d'une autre ligne géométrique (la directrice), localisée entièrement dans un plan géométrique. La directrice est de préférence une circonférence, une ellipse ou un polygone et la génératrice est de préférence une droite géométrique. Dans le cas d'un polygone, celui-ci est de préférence un polygone régulier. Les corps de révolution sont préférés, principalement les cylindres droits (dont la directrice est une circonférence) et les prismes droits.

Selon que n égale 2 ou est supérieur à 2, on met en oeuvre une seule bague indéformable ou plusieurs (au moins deux) bagues indéformables. Les dimensions et le profil de la ou de chaque bague et des manchons formant l'assemblage tubulaire doivent être compatibles avec les dimensions et le profil du cylindre, de manière que ce dernier puisse être enchâssé ou introduit à l'intérieur dudit assemblage tubulaire. En d'autres termes, le cylindre doit au moins pouvoir coulisser dans la ou chaque bague et dans les manchons. La bague et les manchons peuvent avoir des dimensions qui s'adaptent avec précision à celles du cylindre, de telle sorte que lorsque ce dernier est enchâssé dans l'assemblage tubulaire, il se trouve en contact, sur une partie ou la totalité de sa surface périphérique avec la ou chaque bague et avec les manchons. En variante, un espace peut être ménagé entre la paroi interne de l'assemblage tubulaire et la surface périphérique du cylindre, lorsque ce dernier est enchâssé dans l'assemblage tubulaire. Nonobstant les caractéristiques qui viennent d'être énoncées, la forme et les dimensions du cylindre, de la ou de chaque bague et des manchons ne sont pas critiques pour la définition de l'invention ; elles vont dépendre de divers paramètres, notamment de la destination du ressort, de ses dimensions et des propriétés recherchées.

Selon l'invention, on préfère que le cylindre soit un cylindre droit et que les manchons soient des manchons cylindriques droits. On entend désigner par cylindre droit un cylindre dont la génératrice est une droite. Un manchon cylindrique droit est un manchon dont la face intérieure est un cylindre droit.

Dans le procédé selon l'invention, le cylindre peut être un cylindre plein ou un cylindre tubulaire. Il peut être un cylindre composite que l'on obtient en enchâssant un noyau cylindrique en élastomère thermoplastique, dans un fourreau en élastomère thermoplastique. Dans cette forme d'exécution particulière du procédé selon l'invention, le noyau peut être un noyau plein ou un noyau tubulaire.

L'effort de compression est exercé transversalement au plan de la ou de chaque bague. Il a pour fonction de déformer le cylindre et les manchons. Il doit être au moins suffisant pour provoquer une déformation rémanente du cylindre. Il est de préférence suffisant pour provoquer une déformation rémanente du cylindre et des manchons. Pendant l'effort de compression, le cylindre et les manchons subissent une contraction dans la direction de l'effort de compression et une expansion transversalement à cette direction, de part et d'autre de la ou de chaque bague. L'expression « bague indéformable » a été définie plus haut comme étant une bague ou un anneau dont le diamètre intérieur ne subit pas de changement substantiel pendant la fabrication du ressort. L'expression « dont le diamètre intérieur ne subit pas de changement substantiel pendant la fabrication du ressort » signifie que, pendant l'effort de compression explicité plus haut, le diamètre intérieur de la bague ne se modifie pas ou subit une expansion notablement moindre que l'expansion transversale susdite du cylindre. L'expression « ne se modifie pas » signifie que le diamètre intérieur de la bague ne croît pas de plus de 5 mm (le plus souvent de plus de 1 mm) pendant la compression. L'expression « une expansion notablement moindre que l'expansion transversale susdite du cylindre » signifie que, pendant la compression, le diamètre intérieur de la bague croît, mais moins que le diamètre extérieur du cylindre, le rapport entre l'accroissement du diamètre de la bague et celui du cylindre étant généralement inférieur à 1/2, de préférence à 1/10, les valeurs inférieures à 1/100 (particulièrement à 1/250, par exemple comprises entre 1/500 et 1/1000) étant spécialement préférées. Dans la définition qui précède, le diamètre intérieur de la bague est le diamètre d'un cercle dont le périmètre est égal au périmètre de l'ouverture de la bague. Le diamètre extérieur du cylindre est le diamètre d'un cercle dont le périmètre est égal au périmètre extérieur du cylindre, dans un plan transversal à la direction de l'effort de compression.

Après avoir exercé l'effort de compression, on relâche celui-ci, de sorte que le corps composite (formé du cylindre, de la bague ou des bagues indéformable(s) et des manchons) adopte une forme intermédiaire entre celle qu'il avait avant d'exercer l'effort de compression et celle qu'il avait à l'état comprimé. Cette forme intermédiaire est celle du ressort selon l'invention, qui a été explicitée plus haut. Elle se caractérise par la présence de n anneaux bombés (ou.boudins annulaires) superposés en élastomère thermoplastique, alternant avec (n-1) bague(s) indéformable(s).

Dans le procédé selon l'invention, la grandeur de l'effort de compression va dépendre de la forme et des dimensions du cylindre, de la ou de chaque bague et des manchons, ainsi que de l'élastomère thermoplastique et des propriétés recherchées pour le ressort. Elle doit être déterminée dans chaque cas particulier par l'homme du métier. Des informations concernant l'effort de compression sont accessibles dans les documents US-A-4 198 037, GB-A-2 180 618 et WO 98/46930.

Bien que cela ne soit pas indispensable, on peut, en variante, soumettre l'élastomère thermoplastique du corps composite à un traitement thermique approprié avant, pendant ou après avoir exercé l'effort de compression. Des informations concernant ce traitement thermique sont accessibles dans le document US-A-4 198 037.

Dans une forme d'exécution préférée du procédé selon l'invention, le cylindre et les manchons sont de révolution suivant un axe commun et on exerce l'effort de compression dans une direction qui est sensiblement parallèle à cet axe commun.

Dans le procédé selon l'invention, l'assemblage tubulaire dans lequel on enchâsse le cylindre, comprend au moins une bague et au moins deux manchons. Comme exposé plus haut, il n'y a en principe pas de limite au nombre n de manchons et au nombre (n-1) de bagues. Le procédé selon l'invention permet ainsi de réaliser de manière simple, rapide et économique des ressorts de compression de grande longueur (et, par conséquent, de grande course) et de faible encombrement latéral. Dans le procédé selon l'invention, la hauteur du cylindre et la longueur de l'assemblage formé des bagues indéformables et des manchons sont limitées par la nécessité d'éviter un flambage sous l'action de l'effort de compression.

Dans une forme d'exécution particulière de l'invention, destinée à réduire ce risque de flambage, le cylindre est tubulaire et on insère un barreau indéformable dans ce cylindre tubulaire, avant d'exercer l'effort de compression. Dans cette forme d'exécution du procédé selon l'invention, la matière du barreau n'est pas critique pour la définition de l'invention. Le barreau indéformable peut par exemple être en métal, en bois ou en polymère de synthèse. L'acier convient bien. Dans cette forme d'exécution du procédé selon l'invention, on peut introduire un lubrifiant entre le barreau et le cylindre tubulaire.

Dans le procédé selon l'invention, les manchons glissent sur le cylindre pendant que l'on exerce l'effort de compression et également au cours de la détente qui suit la cessation de l'effort de compression. Toutes autres choses étant égales par ailleurs, la grandeur de l'effort de compression dépend des forces de frottement des manchons sur le cylindre. On a observé de manière inattendue, que les propriétés mécaniques du ressort dépendent également de ces forces de frottement. En se fondant sur ce résultat inattendu du procédé selon l'invention, on a dès lors trouvé que l'on peut agir sur les propriétés intrinsèques du ressort, en agissant sur lesdites forces de frottement, par exemple en lubrifiant l'interface du cylindre et des manchons ou en conférant une rugosité appropriée à cette interface.

Le procédé selon l'invention permet de moduler à volonté et facilement les propriétés mécaniques des ressorts de compression en élastomère thermoplastique, par une sélection appropriée de la forme et des dimensions du cylindre en élastomère thermoplastique, ainsi que du nombre de manchons en élastomère thermoplastique et de bagues indéformables. Il permet la fabrication de ressorts de propriétés mécaniques très variées, en particulier des ressorts durs, des ressorts souples, des ressorts à longue course et des ressorts de courte course. Par définition, la dureté d'un ressort est le rapport entre la force de compression nécessaire pour déformer le ressort et la déformation qu'il subit. La course d'un ressort est la déformation qu'il subit sous l'action de la force de compression maximum admissible (pour ne pas provoquer une déformation rémanente supplémentaire).

Le procédé selon l'invention facilite par ailleurs la fabrication à prix réduit d'une gamme étendue de ressorts de compression, par assemblage d'éléments que l'on sélectionne de manière appropriée parmi un nombre limité de noyaux, tubes, manchons et fourreaux préfabriqués en élastomère thermoplastique. En outre, après avoir été assemblés, lesdits éléments peuvent être solidarisés entre-eux en une seule opération de compression.

Le procédé selon l'invention présente en outre l'avantage de réduire les coûts de fabrication des ressorts de compression en matière élastomère. L'extrusion ou le moulage de tubes ou de cylindres de faible épaisseur, que l'on emboîte pour former un corps composite se révèle en effet généralement plus facile et moins onéreuse que la fabrication d'un corps unique de forte épaisseur.

### Brève description des figures

Des particularités et détails de l'invention vont apparaître au cours de la description suivante des figures annexées, qui représentent quelques formes de réalisation particulières de l'invention.
La figure 1 montre, en section axiale, un ressort élémentaire de l'art antérieur ;
La figure 2 montre un autre ressort de l'art intérieur
La figure 3 est une vue analogue à la figure 2, d'une première forme de réalisation du ressort selon l'invention ;
Les figures 4 et 5 montrent, en section axiale verticale, deux étapes successives du procédé selon l'invention, appliqué à la fabrication du ressort de la figure 3 ;
Les figures 6, 7 et 8 sont des vues analogues à la figure 3, de trois autres formes de réalisation du ressort selon l'invention ;
La figure 9 montre en section verticale axiale, une étape de fabrication du ressort de la figure 8 ; et
La figure 10 est une vue analogue aux figures 3, 6, 7 et 8, d'une forme de réalisation supplémentaire du ressort selon l'invention.

Les figures ne sont pas dessinées à l'échelle.

Généralement, les mêmes numéros de référence désignent les mêmes éléments.

### Description détaillée de modes de réalisation particuliers

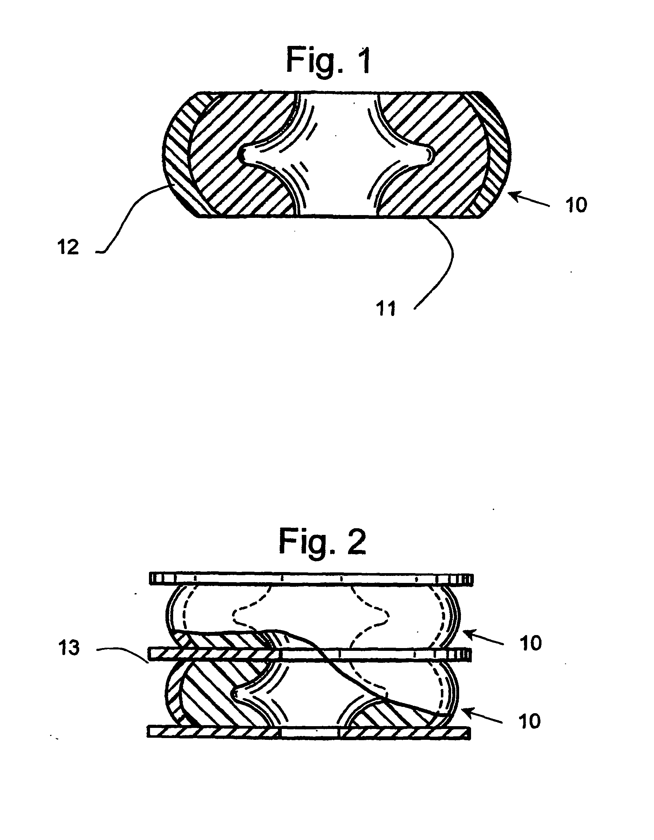

La figure 1 montre un ressorts antérieur à l'invention, décrit dans le document WO 98/46930. Il est constitué d'un boudin annulaire 10, formé d'un cylindre tubulaire 11 dans un manchon bombé 12.

La figure 2 montre un autre ressort antérieur à l'invention. Celui-ci consiste en une paire de boudins annulaires individuels 10 entre lesquels un disque métallique 13 est interposé. Les deux boudins 10 sont identiques à celui de la figure 1 et ils sont solidarisés au disque 13 par collage ou ancrage mécanique.

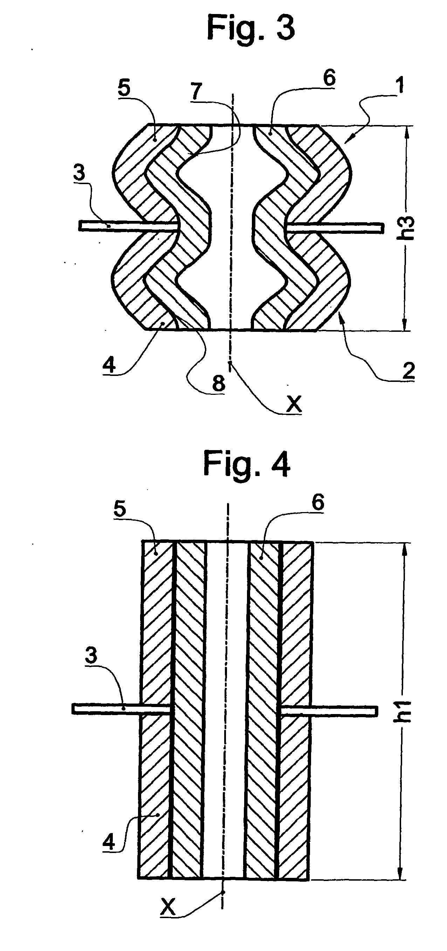

Le ressort représenté à la figure 3 est conforme à l'invention. Il comprend deux boudins annulaires 1 et 2, de part et d'autre d'une bague 3 en acier. La bague 3 est prise en sandwich entre deux manchons bombés 4 et 5 et elle enserre un cylindre 6. Les manchons 4 et 5 et le cylindre 6 sont en un élastomère thermoplastique, celui-ci pouvant avec avantage être l'élastomère thermoplastique ARNITEL^{®}. En variante, les manchons 4 et 5 et le cylindre 6 peuvent être en des élastomères thermoplastiques différents (par exemple, les manchons 4 et 5 peuvent être en élastomère ARNITEL^{®} et le cylindre 6 peut être en élastomère thermoplastique HYTREL^{®}, ou vice-versa). Le cylindre 6 est un cylindre tubulaire et il est de révolution autour d'un axe X. Il est engendré par une génératrice 7 de forme ondulée en double V, de part et d'autre de la bague 3. Les deux manchons 4 et 5 sont de révolution autour de l'axe X et engendrés chacun par une génératrice 8 en forme de V. Le cylindre 6 est ainsi enchâssé dans les deux manchons 4 et 5, ceux-ci étant en contact avec le cylindre 6 sur la totalité de sa superficie. Le cylindre 6 forme deux boudins annulaires, de part et d'autre de la bague 3 et les manchons 4 et 5 ont leur face latérale extérieure qui est bombée ou convexe et leur face circulaire intérieure qui est concave. Les deux boudins du cylindre 6 s'encastrent respectivement dans la face concave des deux manchons 4 et 5.

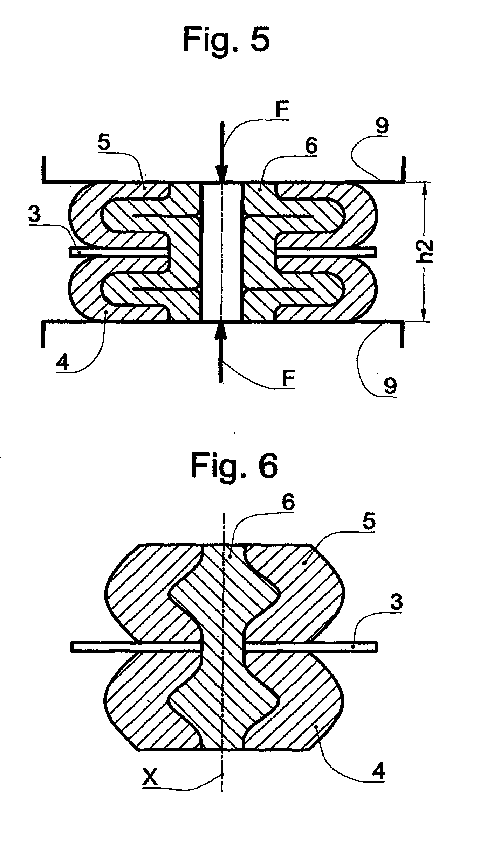

Les figures 4 et 5 montrent deux étapes consécutives du procédé selon l'invention pour la fabrication du ressort de la figure 3.

Conformément à la figure 4, on enfile sur un cylindre tubulaire droit 6 en élastomère thermoplastique, successivement un premier manchon cylindrique droit 4 en élastomère thermoplastique, une bague métallique 3 et un second manchon cylindrique droit 5 en élastomère thermoplastique. Les dimensions du cylindre tubulaire 6, des manchons 4 et 5 et de la bague 3 sont choisies de manière que les deux manchons 4 et 5 et la bague 3 coulissent sur le cylindre tubulaire 6, leur diamètre intérieur étant sensiblement égal au diamètre extérieur du cylindre tubulaire 6.

Après avoir enfilé les manchons 4 et 5 et la bague 3 sur le cylindre tubulaire 6, on comprime le corps composite ainsi obtenu entre deux plaques 9, avec un effort de compression F parallèle à l'axe commun X du cylindre tubulaire 6 et des manchons 4 et 5 (figure 5). La force F est suffisante pour provoquer une déformation rémanente du cylindre tubulaire 6 et des deux manchons 4 et 5 (figure 5). Sous l'action de la force F, la face extérieure du cylindre tubulaire 6 glisse sur la face intérieure des manchons 4 et 5, jusqu'à écrasement du cylindre tubulaire 6 et des manchons 4 et 5, comme représenté à la figure 5. La bague métallique 3 (qui a été conformée de manière à ne pas subir de déformation sensible sous l'action de la force F) se trouve pincée en sandwich entre les deux manchons 4 et 5 (figure 5).

Immédiatement après déformation du cylindre 6 et des manchons 4 et 5 comme schématisé à la figure 5, on relâche l'effort de compression F, pour permettre à l'élastomère thermoplastique de se relaxer ou détendre. Le corps composite (formé du cylindre 6, des deux manchons 4 et 5 et de la bague 3) acquiert le profil de la figure 3. Il conserve une déformation rémanente, sa hauteur (h₃) (figure 3) étant intermédiaire entre la hauteur (h₁) avant la compression (figure 4) et la hauteur (h₂) sous la compression (figure 5). Pour ce qui concerne ses propriétés mécaniques (notamment sa dureté et sa course), le ressort de la figure 3 est équivalent à celui de la figure 2 (conforme à l'art antérieur). La fabrication du ressort de la figure 3 est toutefois plus facile que celle du ressort équivalent de la figure 2, obtenu par superposition de deux ressorts élémentaires de la figure 1. Elle évite les inconvénients cités plus haut, en référence aux documents US-A-4 198 037, GB-A-2 180 618 et WO-01/34995 et n'impose qu'une seule opération de compression, contrairement aux procédés décrits dans ces trois documents, qui nécessitent au moins deux opérations successives de compression.

Dans une variante du procédé décrit en référence aux figures 4 et 5, on interfère sur le glissement du cylindre 6 dans les manchons 4 et 5, en lubrifiant leurs faces qui sont en contact ou en leur conférant un état de surface approprié.

Le ressort schématisé à la figure 6 diffère du ressort de la figure 3, du fait que le cylindre 6 consiste en un noyau plein. Toutes autres choses étant égales par ailleurs, le ressort de la figure 6 possède une dureté plus grande que celle du ressort de la figure 2.

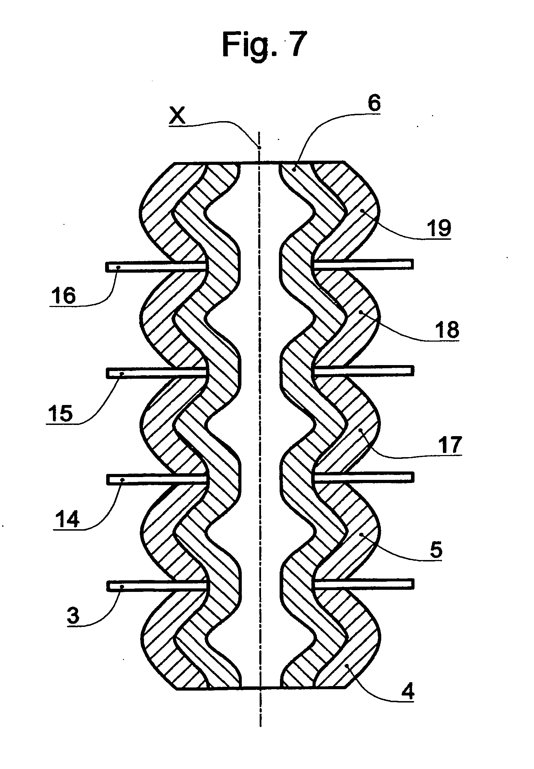

Le ressort de la figure 7 comprend quatre bagues métalliques 3, 14, 15 et 16 qui enserrent le cylindre tubulaire 6 et qui alternent avec cinq manchons 4, 5, 17, 18 et 19.

Le ressort de la figure 7 est équivalent à un ressort composite, obtenu en empilant cinq ressorts élémentaires identiques à celui de la figure 1.

Pour fabriquer le ressort de la figure 7, on opère comme décrit plus haut en référence aux figures 4 et 5. On empile cinq manchons cylindriques droits autour d'un cylindre tubulaire droit, en interposant des bagues métalliques entre les manchons. Après compression de l'empilage ainsi réalisé et relâchement de l'effort de compression, comme exposé plus haut, l'empilage conserve une déformation rémanente et acquiert le profil schématisé à la figure 7.

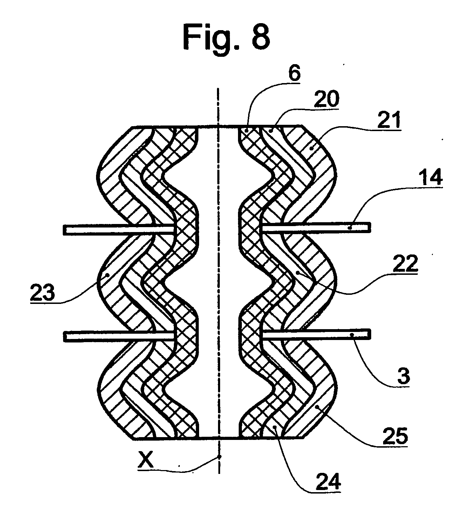

Le ressort représenté à la figure 8 comprend deux bagues métalliques 3 et 14, qui sont disposées autour du cylindre tubulaire 6 et qui sont prises en sandwich entre trois manchons 20, 22 et 24. Chaque manchon 20, 22, 24 se trouve en outre enchâssé dans un fourreau 21, 23, 25.

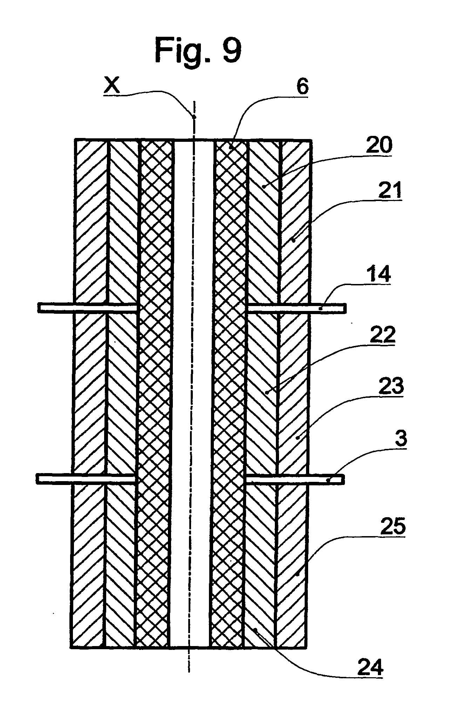

Pour fabriquer le ressort de la figure 8, on empile autour d'un cylindre tubulaire droit 6 (Fig. 9), successivement un manchon 24, qui coulisse sur ledit cylindre 6, un fourreau 25, qui coulisse sur le manchon 24, la bague 3, un manchon 22, qui coulisse sur le cylindre 6, un fourreau 23, qui coulisse sur le manchon 22, la bague 14, un manchon 20, qui coulisse sur le cylindre tubulaire 6 et un fourreau 21, qui coulisse sur le manchon 20. On soumet ensuite l'empilage ainsi réalisé à un effort de compression, que l'on fait suivre d'une détente, comme exposé plus haut en référence aux figures 4, 5 et 3.

Dans des formes de réalisation modifiées des ressorts schématisés aux figures 3, 7 et 8, on insère un barreau métallique (non représenté) à l'intérieur du cylindre tubulaire 6, avant d'exercer la force de compression F. Le barreau a pour fonction de s'opposer à un flambage de l'empilage pendant la compression, ainsi que pendant l'utilisation du ressort. Le cylindre tubulaire 6, interposé entre le barreau et les bagues 3 (Fig. 3), 3, 14, 15, 16 (Fig. 7), 3, 14 (Fig. 8) joue le rôle d'un coussinet pendant l'utilisation du ressort et empêche un frottement dudit barreau contre les bagues et une usure prématurée de celles-ci.

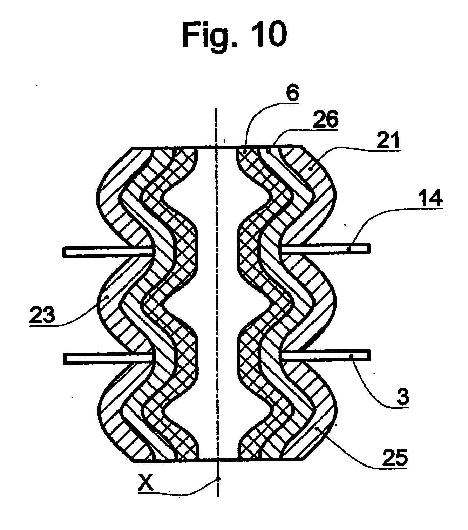

Dans le ressort représenté à la figure 10, le cylindre tubulaire 6 est composite. Il est formé d'un noyau cylindrique 27 en élastomère thermoplastique, enchâssé dans un fourreau 26 en élastomère thermoplastique. Le noyau cylindrique 27 est tubulaire. En variante, il pourrait être un cylindre plein. Deux bagues métalliques 3 et 14 enserrent le fourreau 26 et sont prises en sandwich entre trois manchons 21, 23 et 25 en élastomère thermoplastique.
Pour fabriquer le ressort de la figure 10, on enchâsse un tube cylindrique droit 27 en matière thermoplastique dans un fourreau tubulaire droit 26 en matière thermoplastique. On enfile ensuite sur le fourreau 26 successivement un manchon cylindrique droit 25 en élastomère thermoplastique, une bague 3, un manchon cylindrique droit 23 en élastomère thermoplastique, une bague 14 et un manchon cylindrique droit 21 en élastomère thermoplastique. Puis on comprime axialement le corps composite ainsi constitué, avec une force suffisante pour provoquer une déformation rémanente du noyau cylindrique 27, du fourreau 26, et des manchons 21, 23, 25, de la manière exposée plus haut en référence pour les ressorts des figures 3 et 8.

## Revendications

1. Ressort de compression comprenant un cylindre en élastomère thermoplastique, qui est enchâssé dans un assemblage composite comprenant une alternance de n manchons en élastomère thermoplastique et de (n-1) bague(s) sensiblement indéformable(s), la ou chaque bague indéformable étant prise en sandwich entre deux desdits manchons et encerclant ledit cylindre, **caractérisé en ce que** les manchons (4, 5, 17, 18, 19) sont des corps géométriques en forme d'anneau dont la face latérale est cintrée vers l'extérieur du ressort.

2. Ressort selon la revendication 1, **caractérisé en ce que** le cylindre (6) forme n boudins superposés, qui alternent avec les bagues (3, 14, 15, 16) et qui sont encastrés respectivement dans les faces circulaires intérieures concaves des manchons (4, 5, 17, 18, 19).

3. Ressort selon la revendication 1 ou 2, **caractérisé en ce que** le cylindre (6) est composite et comprend un noyau cylindrique (27) enchâssé dans au moins un fourreau (26).

4. Ressort selon l'une quelconque des revendications 1 à 3, **caractérisé en ce qu'**un barreau indéformable se trouve inséré dans le cylindre (6) qui est tubulaire, respectivement dans le noyau (27) qui est tubulaire, et est en contact avec la paroi dudit cylindre tubulaire, respectivement dudit noyau tubulaire.

5. Ressort selon l'une quelconque des revendications 1 à 4, **caractérisé en ce que** l'un au moins des manchons (20, 22, 24) est enchâssé à l'intérieur d'un fourreau périphérique (21, 23, 25) ou d'un assemblage d'au moins deux fourreaux périphériques 20, 21 ; 22, 23 ; 24, 25) enchâssés l'un dans l'autre.

6. Procédé de fabrication d'un ressort de compression conforme à l'une quelconque des revendications 1 à 5, **caractérisé en ce qu'**on enchâsse un cylindre en élastomère thermoplastique (6) dans un assemblage tubulaire comprenant n manchons (4, 5, 17, 18, 19) en élastomère thermoplastique alternant avec (n-1) bague(s) sensiblement indéformable(s) (3, 14, 15, 16), de telle manière que la ou chaque bague soit prise en sandwich entre une paire desdits manchons, on soumet le corps composite ainsi obtenu, à un effort de compression suffisant pour provoquer une déformation rémanente du cylindre et on relâche ensuite l'effort.

7. Procédé selon la revendication 6, **caractérisé en ce qu'**on exerce l'effort de compression (F) dans une direction sensiblement parallèle à l'axe du cylindre (6).

8. Procédé selon la revendication 6 ou 7, **caractérisé en ce que** l'effort de compression est suffisant pour provoquer une déformation rémanente du cylindre (6) et du ou de chaque manchon (4, 5, 17, 18, 19).

9. Procédé selon l'une quelconque des revendications 6 à 8, **caractérisé en ce qu'**on sélectionne les dimensions et le profil des manchons (4, 5, 17, 18, 19) et de la ou de chaque bague (3, 14, 15, 16) de telle sorte qu'après avoir enchâssé le cylindre dans l'assemblage tubulaire et avant d'exercer l'effort de compression, le cylindre (6) soit sensiblement en contact avec les manchons (4, 5, 17, 18, 19) et avec la ou chaque bague (3, 14, 15, 16), sur sensiblement la totalité de son périmètre.

10. Procédé selon l'une quelconque des revendications 6 à 9, **caractérisé en ce qu'**avant d'exercer l'effort de compression (F), on insère un barreau indéformable dans le cylindre (6), qui est tubulaire.

## Claims

1. A compression spring comprising a cylinder made of a thermoplastic elastomer, which is set in a composite assembly comprising a set of n sleeves made of thermoplastic elastomer alternating with (n-1) collar(s) which are substantially non-deformable, wherein the or each collar is sandwiched between two sleeves of said n sleeves and encompasses said cylinder, **characterised by** the fact that said sleeves (4, 5, 17, 18, 19) are geometrical bodies having the form of a ring whose lateral face is curved towards the exterior of the spring.

2. The spring according to claim 1, **characterised by** the fact that the cylinder (6) forms n flanges which are superimposed, which alternate with the collars (3, 14, 15, 16) and which are inserted respectively in the inner circular concave faces of the sleeves (4, 5, 17, 18, 19).

3. The spring according to claim 1 or 2, **characterised by** the fact that the cylinder (6) is a composite cylinder comprising a cylindrical core (27) which is inserted in at least one sheath (26).

4. The spring according to any of one of claims 1 through 3, **characterised by** the fact that a non-deformable bar is inserted in the cylinder (6) which is tubular, or in the core (27) which is tubular, wherein the bar is in contact with the wall of said tubular cylinder, or said tubular core.

5. The spring according to any of one of claims 1 through 4, **characterised by** the fact that at least one of said sleeves (20, 22, 24) is set either inside one peripheral sheath (21, 23, 25) or inside an assembly of at least two peripheral sheaths 20, 21; 23, 23; 24, 25) of which one is set inside the other.

6. A method for the manufacturing of a compression spring according to any of claims 1 through 5, **characterised by** the fact that a cylinder made of a thermoplastic elastomer (6) is set in a tubular assembly comprising n sleeves (4, 5, 17, 18, 19) made of the thermoplastic elastomer alternating with (*n-1*) substantially non-deformable collars (3, 14, 15, 16) in such a manner that the or each collar is sandwiched between a pair of said sleeves, wherein the composite body obtained in this manner is subjected to a compressive effort that is sufficient to provoke a residual deformation of the cylinder, and the effort is then relaxed.

7. The method according to claim 6, **characterised by** the fact that the compressive effort (F) is applied in a direction that is substantially parallel to the axis of the cylinder (6).

8. The method according to claim 6 or 7, **characterised by** the fact that the compressive effort is sufficient to provoke a residual deformation of the cylinder (6) and of the or each sleeve (4, 5, 17, 18, 19).

9. The method according to any one of claims 6 to 8, **characterised by** the fact that the dimensions and the profile of the sleeves (4, 5, 17, 18, 19) and of the or each collar (3, 14, 15, 16) are selected so that after the cylinder has been set in the tubular assembly and before the compressive effort is applied, the cylinder (6) is substantially in contact with the sleeves (4, 5, 17, 18, 19) and with the or each collar (3, 14, 15, 16) on a substantial totality of its perimeter.

10. The method according to any one of claims 6 to 9, **characterised by** the fact that before the compressive effort (F) is applied, a non deformable bar is inserted into the cylinder (6), which is tubular.

## Patentansprüche

1. Druckfeder bestehend aus einem Zylinder aus thermoplastischen Elastomer, der in einer Zusammensetzung bestehend aus einer Alternanz von n Muffen aus thermoplastischen Elastomer und von (*n-1*) deutlich unverformbaren Ringe, damit der oder jeder unverformbarer Ring zwischen zwei der obengenannten Muffen gehalten und umschliessend den obengenannten Zylinder ist, eingefügt wird, **dadurch gekennzeichnet, dass** die Muffen (4, 5, 17, 18, 19) geometrische kranzförmige Körper sind, dessen Aussenwand nach Aussen der Feder gebogen ist.

2. Druckfeder gemäss Anspruch 1, **dadurch gekennzeichnet, dass** der Zylinder (6) die Gestaltung von n übereinander gestellten Kränze, die sich mit den Ringen (3, 14, 15, 16) abwechseln, und die in den runden konkaven Innenfläschen der Muffen (4, 5, 17, 18, 19) eingepasst sind, hat.

3. Druckfeder gemäss Anspruch 1 oder 2, **dadurch gekennzeichnet, dass** der Zylinder (6) mehrschiedenartig ist , und einen zylindrischen Kern (27), der in mindestens eine Scheide (26) eingefügt ist, enthält

4. Druckfeder gemäss irgendeiner der Ansprüchen 1 bis 3, **dadurch gekennzeichnet, dass** eine unverformbare Stange in dem Zylinder (6), der rohrförmig ist, sich eingesetzt befindet, beziehungsweise in dem Kern (27), der rohrförmig ist, und in Kontakt mit der Wand des obengenannten rohrförmigen Zylinders, beziehungsweise, des obengenannten rohrförmigen Kerns.

5. Druckfeder gemäss irgendeiner der Ansprüchen 1 bis 4, **dadurch gekennzeichnet, dass** mindestens eine der Muffen (20, 22, 24) in einer äusseren Scheide (21, 23, 25) oder in einer Zusammensetzung von mindestens zwei äusseren Scheiden (20,21 ; 22, 23 ; 24, 25), die in ein ander eingepresst sind, eingefügt ist.

6. Verfahren zur Herstellung einer Druckfeder gemäss irgendeiner der Ansprüche 1 bis 5, **dadurch gekennzeichnet, dass** mann ein Zylinder aus thermoplastischen Elastomer (6) in einer rohrförmigen Zusammensetzung bestehend aus n Muffen (4, 5, 17, 18, 19) aus thermoplastichen Elastomer abwechselnd mit (*n-1*) deutlich unverformbaren Ringen (3, 14, 15, 16) einfügt, in der Art, dass der oder jeder Ring zwischen ein Par der obergenannten Muffen gehalten sei, mann der so erhaltene Kompositkörper unter einer ausreichender Drukkraft setzt, um eine permanente Verformung zu provozieren, und danach die Druckkraft ablässt.

7. Verfahren gemäss des Ansprüchs 6,
**dadurch gekennzeichnet, dass** mann die Druckkraft (F) in eine Richtung, die fasst parallel zur Axe des Zylinders (6) ausübt.

8. Verfahren gemäss Anspruch 6 oder 7, **dadurch gekennzeichnet, dass** die Druckkraft ausreicht um eine permanente Verformung des Zylinders (6) und der oder mehreren Muffen (4,5, 17, 18, 19) zu erreichen.

9. Verfahren gemäss irgendeiner der Ansprüchen 6 bis 8, **dadurch gekennzeichnet, dass** mann die Dimensionen und das Profil der Muffen (4, 5, 17, 18, 19) und von der oder jeder Ring (3, 14, 15, 16) auswählt, in der Art dass nachdem mann der Zylinder in der rohrförmigen Zusammensetzung eingefügt hat und bevor mann die Druckkraft ausübt, der Zylinder (6) deutlich mit den Muffen (4, 5, 17, 18, 19), und mit dem oder jeden Ring (3, 14, 15, 16), auf deutlich dem ganzen Umfang in Kontakt sei.

10. Verfahren gemäss irgendeiner der Ansprüchen 6 bis 9, **dadurch** gekennzeichent, dass bevor mann die Druckkraft (F) ausübt, mann eine unverformbare Stange in den rohrförmigen Zylinder (6) einsetzt.
